# EUROPEAN PATENT APPLICATION

(11) **EP 3 291 158 A1**
(43) Date of publication of application: **07.03.2018**
(21) Application number: 16306106.2
(22) Date of filing: 02.09.2016
(51) Int. Cl.: G06Q 20/34, G07F 7/10

(54) **LOADING A JAVA CARD MEMORY WITH A JAVA CARD PACKAGE THROUGH A CARD PERSONALIZATION SPECIFICATION FLOW**

(71) Applicant: GEMALTO SA, 92190 Meudon (FR)
(72) Inventor: FAVREAU, Valentin, 92190 Meudon (FR); CHAFER, Sylvain, 92190 Meudon (FR); GUMILANG, Heldi, 92190 Meudon (FR)
(74) Representative: Lotaut, Yacine Diaw

(57) **Abstract**

A method of loading a Java Card memory with a Java Card package through a Card Personalization Specification (CPS) flow. The method proposes to encapsulate the Java Card package destined to be loaded into the Java Card memory in an extra proprietary Data Grouping Identifier (DGI) added at the beginning of a standard DGI sequence. By adding the extra DGI containing a Java Card package at the beginning of the DGI sequence, the Java Card application writes the Java Card package into the Java Card memory. The Java Card package then receives the rest of the DGIs from the application and handles the personalization process by writing itself the personalized data into the memory.

## Description

### TECHNICAL FIELD

The present invention relates to a method of loading a Java Card memory with a Java Card package through a card personalization specification flow.

It finds applications, in particular, in smart card products where it is aimed at storing ever growing quantities of applications (applets) despite limited memory resources.

### RELATED ART

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Java Card technology was introduced in 1996 and is now widely used in the smart card domain (notably for SIM cards or ATM cards). It allows java-based applications (applets) to run on smart cards and other similar devices which have limited memory resources. These applications usually do not have large memory footprint when taken individually. However, since the market tends to demand storing more and more of these applications on single java cards, it urges researchers to seek after solutions for reducing the memory space consumed by each application.

The different approaches considered so far all involve modifying the application code itself to reduce its memory footprint. The optimization of the code can be performed by hand, by refactoring byte code or by using a proprietary byte code in order to reduce the memory footprint. However, such optimization is set to be limited in terms of efficiency, and the memory footprint reduction currently achieved this way is non substantial. This calls for new ways of implementing a reduction of the memory space required for storing applications.

An alternative approach, could consist in implementing the binary code associated with the personalization of an application in a separate personalization package and to remove this package from the Java Card memory once the personalization is complete.

To achieve the above approach, the personalization package would have to be loaded into the Java Card memory separately from the applet package. However, the Card Personalization Specification (CPS) flow, *i.e.* the standard personalization process as defined by Europay Mastercard Visa (EMV) CPS which is based on sending Data Grouping Identifiers (DGI_{S}) to the application to be personalized, does not offer the possibility to load a package. Thus another way is to be considered.

One way that could come to mind relies on using Global Platform (GP) commands to load the personalization package. However, this would present a number of limitations. Firstly, the loading would be slow since it would involve sending multiple GP commands. The personalization process duration, as any operation duration, is critical in an industrialization process. Secondly, from a customer point of view, it would not be transparent when compared to a standard personalization process. Stated otherwise, it would be expected from the customer to perform operations which he is not familiar with, and which can take him some extra time.

### SUMMARY

To address these needs, the present invention relates to a method of loading a Java Card memory with a Java Card package through a Card Personalization Specification (CPS) flow. In particular, the method proposes to encapsulate the Java Card package destined to be loaded into the Java Card memory in an extra proprietary Data Grouping Identifier (DGI) added at the beginning of a standard DGI sequence.

The CPS flow, as it already exists in the prior art, is composed of such DGI sequences. In a known personalization process a DGI sequence, which corresponds to the personalization code, is sent within an Application Protocol Data Unit (APDU) to a Java Card application intended to be personalized. This application then processes the DGIs and causes the personalized data to be written into the memory of the Java Card.

According to embodiments of the proposed invention, the extra DGI containing a Java Card package is linked off-card with a Java Card application package containing the Java Card application or applet and is added at the beginning of the DGI sequence. The Java Card application then writes the Java Card package into the Java Card memory. The Java Card package can then receive the rest of the DGIs from the application and handle the personalization process by writing the personalized data into the memory. It will be noted that such writing is controlled by the Java Card package itself.

More specifically, according to a first aspect there is proposed a method to load a java card package into a Java Card memory through a card personalization specification flow, comprising:
- the Java Card receiving a Data Grouping Identifier, DGI, sequence within the CPS flow, said DGI sequence having at least one DGI at its beginning which contains a Java Card package;
- the Java Card applet processing the data received in the DGI containing the Java Card package, said processing comprising the writing of the Java Card Package into the Java Card memory;
- the Java Card applet further forwarding every DGI following the at least one first DGI of the DGI sequence to the Java Card package written in the Java Card memory; and,
- the Java Card package processing the data of the DGIs forwarded by the Java Card applet, said processing comprising the writing of said data into the Java Card memory.

The Java Card package can be linked with a Java Card applet package which contains the Java Card applet intended to be personalized.

The above method ultimately allows the loading of the Java Card memory with the Java Card package in a transparent way for the customer as compared to using GP commands. Indeed, the CPS flow remains comparable with the CPS flow according to prior art, and uses a DGI sequence in a similar way.

This provides a fast loading of a package and also offers the possibility of implementing the Java Card package in a way that improves the memory capacity management.

Furthermore, the Java Card package can handle by itself the personalization process and write personalized data in the Java Card memory. This means that, when implementing the approach where all the code related to the personalization has been separated in a different package, namely a personalization package, this package can be loaded in a fast and transparent way and can be erased from the memory once the personalization process is complete.

According to embodiments taken alone or in combination:
- The Java Card Package is linked off-card with a Java Card applet package containing the Java Card applet.
- The Java Card package is written at a location of the Java Card memory that minimizes the memory fragmentation.
- The Java Card package contained in a DGI is written into a Non Volatile Memory, NVM, of the Java Card.
- The data of the following DGIs received from the Java Card applet are written by the Java Card package into the NVM of the Java Card.
- The DGI sequence is received within an Application Protocol Data Unit, APDU.
- The Java Card package only contains code needed during the personalization of the Java Card applet.
- The Java Card package is intended to be deleted from the Java Card memory once the personalization of the main applet has been completed.

A second aspect of the invention relates to a computer program product comprising one or more stored sequences of instructions that are accessible to a processor and which, when executed by the processor, cause the processor to perform the steps of a method according to the first aspect.

Finally, a third aspect of the invention proposes a device for loading a Java Card memory with a Java Card package through a Card Personalization Specification, CPS, flow comprising:
- a receiving unit in the Java Card, adapted for receiving a Data Grouping Identifier, DGI, sequence within the CPS flow, said DGI sequence having at least one DGI at its beginning which contains a Java Card package;
- a first processing block in the Java Card applet, adapted for processing the data received in the DGI containing the Java Card package, said processing comprising the writing of the Java Card Package into the Java Card memory;
- a sending block in the Java Card applet, adapted for forwarding every DGI following the at least one first DGI of the DGI sequence to the Java Card package written in the Java Card memory; and,
- a second processing block in the Java Card package, adapted for processing the data of the DGIs forwarded by the Java Card applet, said processing comprising the writing of said data into the Java Card memory.

### BRIEF DESCRIPTION OF THE DRAWINGS

Embodiments of the present invention are illustrated by way of example, and not by way of limitation, in the figures of the accompanying drawings, in which like reference numerals refer to similar elements and in which:
- Figure 1 is a schematic illustration of a standard DGI sequence according to the prior art;
- Figure 2 is a schematic illustration of DGI sequence wherein an extra DGI containing a Java Card package has been added at the beginning of the sequence.
- Figure 3 is a schematic illustration of a personalization process through a CPS flow according to the prior art.
- Figure 4 is a flow chart of the steps of the method of loading a Java Card memory with a Java Card package through a Card Personalization Specification flow.
- Figure 5 is a functional description of a device adapted to perform an embodiment of the method of the invention.

### DESCRIPTION OF PREFERRED EMBODIMENTS

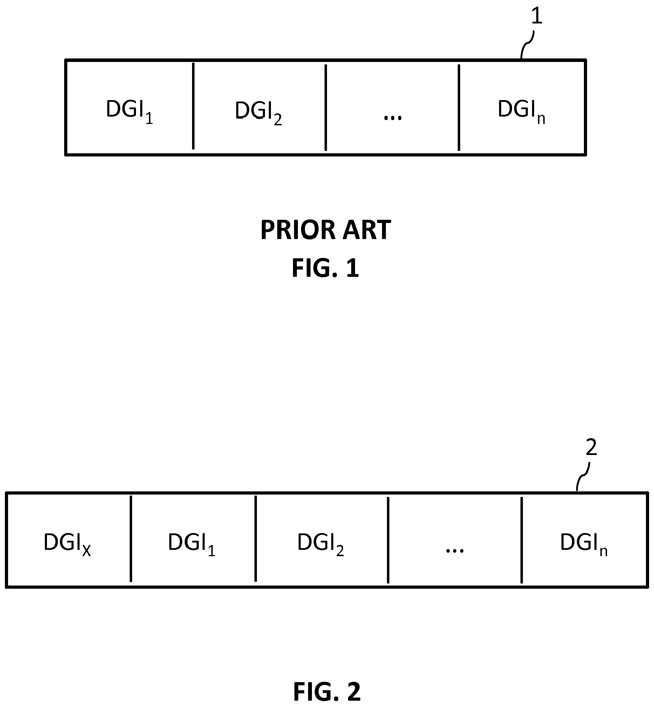

Referring first to Figure 1, there is shown therein a schematic illustration of a standard Data Grouping Identifier (DGI) sequence 1 according to the prior art. The DGI sequence 1 contains a number of DGIs which each contains data intended to be used by the personalization process of a Java Card application.

During the execution of embodiments of the method according to the invention, the Java Card application processes and writes this data into the Java Card memory.

Referring now to Figure 2, there is shown therein a schematic illustration of DGI sequence 2 wherein an extra DGI containing a Java Card package (DGIₓ in the figure) has been added at the beginning of the sequence. The Java Card package encapsulated in the DGI has been linked off-card with a Java Card applet package which contains the Java Card applet intended to be personalized. A CPS flow is composed of the DGI sequence 2, in a way that is transparent to a customer.

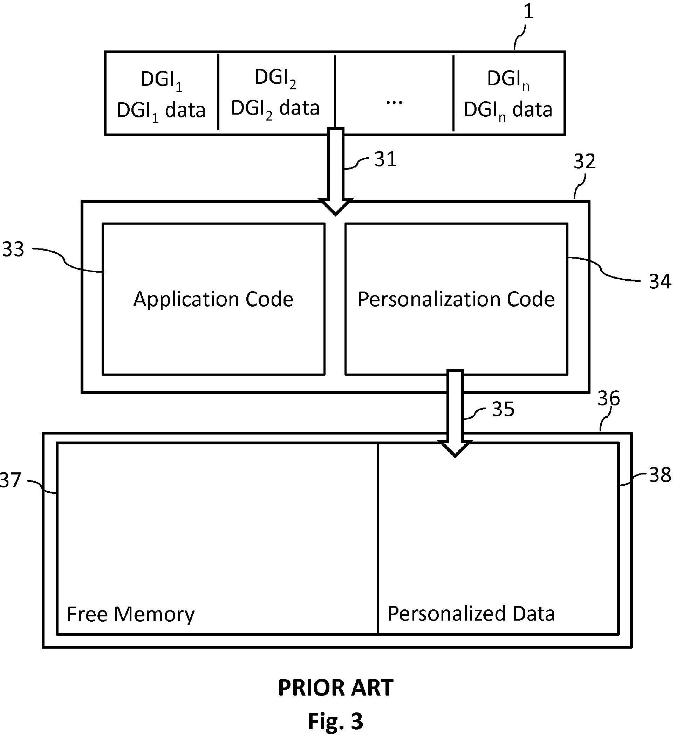

Referring to Figure 3, there is shown diagrammatically illustrated therein the personalization process of a Java Card application through a CPS flow according to the prior art.

In this process, a DGI sequence 1, as presented in Figure 1, is sent at 31, for instance in an Application Protocol Data Unit (APDU), to the Java Card.

The Java Card application 32, which comprises the application code 33 and the personalization code 34, receives the sequence. After receiving the DGI sequence 1, the Java Card application 32, and in particular the personalization code 34, processes and writes 35 the data of the DGI sequence into the Java Card memory 36.

In particular, personalized data 38 are written into a section of the memory 36 leaving the rest of the memory space as a free memory 37 available for any other purpose.

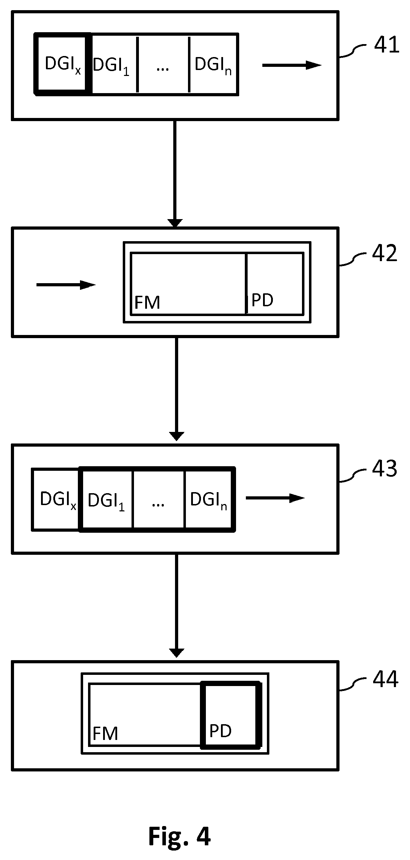

Embodiments of the proposed method shall now be described with reference to Figure 4. More specifically, Figure 4 is a flow chart of steps of the method of loading a Java Card memory with a Java Card package through a Card Personalization Specification (CPS) flow.

At 41, the Java Card receives a DGI sequence. This sequence, previously described in figure 2, contains a DGI within which the Java Card package is encapsulated. This sequence is adapted to be used in a standard CPS flow operating the personalization of a Java Card application.

The DGI that contains the Java Card package has been added at the beginning of the sequence so that it should be the first DGI read and processed by the Java Card application when receiving it. Furthermore, the encapsulated Java Card package can have already been linked-off with a Java Card applet package that contains the Java Card applet in order for the packages to be able to access each other data.

At 42, the Java Card applet which is in the Java Card memory processes and writes the data of the first DGI into the memory of the Java Card. Thus writing the Java Card package into the memory of the Java Card. Said memory can be, for instance, a Non Volatile Memory (NVM) so that this package can more easily be deleted at the end of a personalization process as compared with a Read Only Memory (ROM), for instance.

At 43, the Java Card applet sends the rest of the DGIs of the DGI sequence to the Java Card package. The Java Card package can now handle the rest of the personalization process by itself.

At 44, the rest of the personalization process is handled by the Java Card package. Indeed, the Java Card package receives the rest of the DGIs, processes them and writes the personalized data into the Java Card memory. This data can also, for instance, be written in the NVM like the Java Card package. In any case, it can be written in a way that allows optimizing the memory capacity management.

By accomplishing all these tasks the method allows to transparently load a Java Card package as part of a standard personalization process using a CPS flow. Stated otherwise, the customer can use a DGI sequence as he would do in a standard process except that the personalization is handled by a package different from the Java Card applet package which contains the Java Card applet to be personalized.

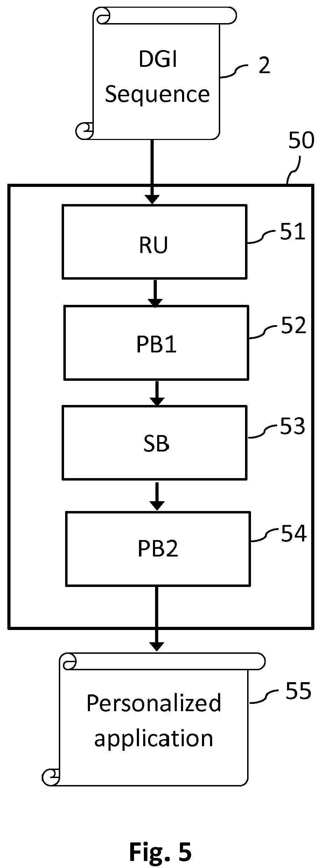

Referring to Figure 5, there is shown therein a functional description of a device 50 adapted to perform the steps of the method of the invention.

A receiving unit (RU) 51 in the Java Card is adapted for receiving a Data Grouping Identifier (DGI) sequence 2, as described in Figure 2, within the CPS flow. The DGI sequence 2 has at least one DGI at its beginning which contains a Java Card package.

A first processing block (PB1) 52 in the Java Card applet is adapted for processing the data received in the DGI containing the Java Card package. The processing comprises the writing of the Java Card Package into the Java Card memory.

A sending block (SB) 53 in the Java Card applet is adapted for forwarding every DGI following the at least one first DGI of the DGI sequence to the Java Card package written in the Java Card memory.

And finally, a second processing block (PB2) 54 in the Java Card package is adapted for processing the data of the DGIs forwarded by the Java Card applet. This processing comprises the writing of the data into the Java Card memory. Thus the device 50 delivers a personalized Java Card application.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the appended claims.

A person skilled in the art will appreciate that various parameters disclosed in the description may be modified and that various embodiments disclosed and/or claimed may be combined without departing from the scope of the invention.

It is stipulated that the reference signs in the claims do not limit the scope of the claims, but are merely inserted to enhance the legibility of the claims.

## Claims

1. A method of loading a Java Card memory with a Java Card package through a Card Personalization Specification, CPS, flow comprising:
- a Java Card applet receiving a Data Grouping Identifier, DGI, sequence within the CPS flow, said DGI sequence having at least one DGI at its beginning which comprises a Java Card package;
- the Java Card applet processing the data received in the DGI comprising the Java Card package, said processing comprising the writing of the Java Card Package into the Java Card memory;
- the Java Card applet further forwarding every DGI following the at least one first DGI of the DGI sequence to the Java Card package written in the Java Card memory; and,
- the Java Card package processing the data of the DGIs forwarded by the Java Card applet, said processing comprising the writing of said data into the Java Card memory.

2. The method of Claim 1, wherein the Java Card Package is linked off-card with a Java Card applet package containing the Java Card applet.

3. The method of any one of Claims 1 and 2 wherein the Java Card package is written at a location of the Java Card memory that minimizes the memory fragmentation.

4. The method of any one of Claims 1 to 3 wherein the Java Card package contained in a DGI is written into a Non Volatile Memory, NVM, of the Java Card.

5. The method of Claim 4 wherein the data of the following DGIs received from the Java Card applet are written by the Java Card package into the NVM of the Java Card.

6. The method of any one of Claims 1 to 5 wherein the DGI sequence is received within an Application Protocol Data Unit, APDU.

7. The method of any one of Claims 1 to 6 wherein the Java Card package only contains code needed during the personalization of the Java Card applet.

8. The method of Claim 7 wherein the Java Card package is intended to be deleted from the Java Card memory once the personalization of the main applet has been completed.

9. A computer program product comprising one or more stored sequences of instructions that are accessible to a processor and which, when executed by the processor, cause the processor to perform the steps of any of Claims 1 to 8.

10. A device for loading a Java Card memory with a Java Card package through a Card Personalization Specification, CPS, flow comprising:
- a receiving unit in the Java Card applet, adapted for receiving a Data Grouping Identifier, DGI, sequence within the CPS flow, said DGI sequence having at least one DGI at its beginning which contains a Java Card package;
- a first processing block in the Java Card applet, adapted for processing the data received in the DGI containing the Java Card package, said processing comprising the writing of the Java Card Package into the Java Card memory;
- a sending block in the Java Card applet, adapted for forwarding every DGI following the at least one first DGI of the DGI sequence to the Java Card package written in the Java Card memory; and,
- a second processing block in the Java Card package, adapted for processing the data of the DGIs forwarded by the Java Card applet, said processing comprising the writing of said data into the Java Card memory.

11. The device of Claims 10, wherein the Java Card comprises a Non Volatile Memory, NVM, in which the Java Card package contained in a DGI is written.

12. The device of Claim 10 or Claim 11, wherein the second processing block is further adapted for writing the data of the following DGIs received from the Java Card applet into the NVM of the Java Card.

13. The device of any one of Claims 10 to 12, wherein the receiving unit is adapted for receiving the DGI sequence within an Application Protocol Data Unit, APDU.

14. The device of any one of Claims 10 to 13, wherein the Java Card package only contains code needed during the personalization of the Java Card applet.

15. The device of Claim 7, wherein the first processing block is further adapted for deleting the Java Card package from the Java Card memory once the personalization of the main applet has been completed.
